# EUROPÄISCHE PATENTSCHRIFT

(11) **EP 2 873 508 B1**
(45) Veröffentlichungstag und Bekanntmachung des Hinweises auf die Patenterteilung: **11.09.2019**
(21) Anmeldenummer: 14188891.7
(22) Anmeldetag: 14.10.2014
(51) Int. Cl.: B29C 48/335, B29C 48/25, B29C 48/71, B29C 48/21, B29C 55/28, B29C 48/10

(54) **Extrusionskopf**
Extrusion head
Tête d'extrusion

(30) Priorität: 15.10.2013 DE 102013111370
(43) Veröffentlichungstag der Anmeldung: 20.05.2015
(73) Patentinhaber: Reifenhäuser GmbH & Co. KG Maschinenfabrik, 53844 Troisdorf (DE)
(72) Erfinder: Herchenbach, Maximilian, 53507 Marienthal-Dernau (DE); Herchenbach, Heinz Joachim, 53474 Bad Neuenahr-Ahrweiler (DE); Lübke, Frank, 54552 Steiningen (DE)
(74) Vertreter: Wagner Albiger & Partner Patentanwälte mbB

(56) Entgegenhaltungen:
- WO-A1-2013/011079
- CN-A- 103 009 602
- DE-U1- 9 003 537
- JP-A- H09 155 949
- US-A- 5 738 881
- WORTBERG J: "NEUE WENDELVERTEILERWERKZEUGE. NEW SPIRAL MANDREL DIES", KUNSTOFFE, CARL HANSER VERLAG, MUNCHEN, DE, Bd. 88, Nr. 2, 1. Februar 1998 (1998-02-01), XP000732884, ISSN: 0023-5563

## Beschreibung

### Stand der Technik

Die Erfindung geht aus von einem Extrusionskopf nach dem Oberbegriff des Anspruchs 1.
Solche Extrusionsköpfe werden beispielsweise als Schlauchfolienblasköpfe oder Rohrextrusionsköpfe verwendet und sind allgemein bekannt. Beispielsweise ist aus der Druckschrift DE 10 2004 040 151 B4 ein Schlauchfolienblaskopf bekannt, wobei der Schlauchfolienblaskopf mehrere konzentrisch um die Mittelachse des Folienblaskopfes angeordnete, ringspaltförmige Schmelzekanäle mit an deren Begrenzungswandungen angeordneten Wendelverteilern aufweist.

Bei diesem Extrusionskopf ist jedoch nachteiligerweise keine Temperaturtrennung möglich. Außerdem ist die Schichtzahl mit dem gleichen Kopf nachträglich nicht erweiterbar. Weiterhin ist die Installation einer Blaseninnenkühlung und von Durchführungen für andere Aggregate, wie zum Beispiel für die Bestäubung, vergleichsweise schwierig. Außerdem erhöht sich die Verweilzeit in den Verteilern mit den Schichten von Innen nach Außen.

Als Alternative zu konzentrischen Wendelverteilerköpfen sind aus dem Stand der Technik horizontale Spiralverteilerköpfe bekannt. Ein solcher horizontaler Spiralverteilerkopf ist zum Beispiel aus der Druckschrift US 5 716 650 bekannt. Er wird auch als "stackable die" oder "pancake die" bezeichnet. Bei solchen Spiralverteilerköpfen bestehen jedoch nachteiligerweise eine relativ geringe Materialverarbeitungsbandbreite und relativ schlechte Dickentoleranzen.

Außerdem entstehen nachteiligerweise relativ lange gemeinsame Fließwege von zwei unter Umständen unterschiedlichen Materialien. Dadurch entsteht insbesondere in den unteren Platten ein relativ hoher Druck. Des Weiteren sind vergleichsweise große Einzelspalte erforderlich, wodurch rheologische Probleme entstehen können. Außerdem gibt es Verteilungsprobleme der unteren (inneren) Schichten, besonders wenn diese dünn oder leicht fließend sind.

Aus mechanischer Sicht ergibt sich der Nachteil, dass vergleichsweise viele aufsummierende Zentriertoleranzen zu Montageproblemen führen können. Des Weiteren entstehen sehr hohe Trennkräfte zwischen den Platten, so dass eine hohe Anzahl an Befestigungsschrauben erforderlich ist. Alternativ sind vergleichsweise starke Stehbolzen erforderlich, die unter Umständen mit Spezialwerkzeugen angezogen werden müssen.

Die JP H09 155949 A beschreibt einen Extrusionskopf, bei dem ein konischer Wendelverteiler mit einem in Fließrichtung der Schmelze nachgeordneten horizontal verlaufenden Spiralschmelzekanal kombiniert wird. Diese Ausgestaltung ist hinsichtlich der Anzahl und Ausgestaltung der Schmelzekanäle nicht variabel, weist hohe Verweilzeiten der einzelnen Schmelzen in den jeweiligen Schmelzekanälen und bei mehreren Schichten ungünstige große Abmessungen auf, was verbesserungswürdig erscheint.

Die US5738881 A und die CN103 009602 A offenbaren weitere Extrusionsköpfe mit konischen Wendelverteilern.

Es ist daher die Aufgabe der vorliegenden Erfindung, einen Extrusionskopf zur Verfügung zu stellen, der die Nachteile des Stands der Technik nicht aufweist.

### Offenbarung der Erfindung

Diese Aufgabe wird mit dem Extrusionskopf gemäß Anspruch 1 gelöst. Der erfindungsgemäße Extrusionskopf weist zusätzlich zum konzentrischen Wendelverteilerkopf einen Spiralverteilerkopf auf.

Die erfindungsgemäße Kombination aus konzentrischem Wendelverteilerkopf und Spiralverteilerkopf bringt eine Reihe von überraschenden Vorteilen mit sich:
- relativ kurze gemeinsame Schmelzekanäle,
- relativ enge Spalten, wodurch eine verbesserte Dickentoleranz erreicht wird und Stagnationsbereiche vermieden werden können,
- vergrößerte Verarbeitungsbandbreite, d.h. erhöhte Flexibilität bezüglich Schichtdickenverhältnissen und Materialkombinationen,
- geringere negative Auswirkungen von Fertigungstoleranzen,
- vereinfachte Verschraubungen, daher schnellere Demontage, Reinigung und Montage,
- geringere Ersatzteilkosten (insbesondere Schrauben),
- Einspeisung in einem relativ begrenzten Höhenbereich, wodurch die Maschineninstallation vereinfacht und die Zugänglichkeit verbessert wird,
- Verringerung der Verweilzeit (insbesondere der äußeren Schichten) im Blaskopf, selbst bei einer großen Anzahl von Schichten und kleinen Düsen,
- Temperaturtrennung an der Schnittstelle zwischen konzentrischem Wendelverteilerkopf und Spiralverteilerkopf möglich,
- Temperaturtrennung im Spiralverteilerkopf möglich,
- einfache Installation einer Innenkühlung möglich,
- Verringerung der Drücke und von rheologischen Problemen,
- Verringerung von Verteilungsproblemen der unteren (inneren) Schichten, selbst wenn diese dünn oder leicht fließend sind,
- Verkleinerung des Zusammenführungsdurchmessers und Erhöhung der Ausstoßleistung,
- Verringerung der Trennkräfte zwischen den Platten, dadurch Verringerung der Anzahl an Befestigungsschrauben bzw. Vermeidung der Verwendung von starken Stehbolzen.

Der konzentrische Wendelverteilerkopf kann eine beliebige Anzahl an konzentrisch zur Mittelachse des Extrusionskopfes angeordneten wendelförmigen Schmelzekanälen aufweisen. Der konzentrische Wendelverteilerkopf kann zum Beispiel einen Schmelzekanal, zwei, drei, vier, fünf, sechs, sieben, oder mehr Schmelzekanäle aufweisen.

Der Spiralverteilerkopf weist mindestens einen spiralförmigen Schmelzekanal (Spiralschmelzekanal) auf. Der mindestens eine Spiralschmelzekanal erstreckt sich im Wesentlichen in einer einzigen, vorzugsweise horizontalen Ebene. Der Spiralverteilerkopf kann statt lediglich einem Schmelzekanal, zwei, drei, vier, fünf, oder mehr spiralförmige Schmelzekanäle aufweisen. Diese Spiralschmelzekanäle können sich zum Beispiel parallel zueinander erstrecken. Insbesondere ist es beispielhaft vorgesehen, dass sich alle Spiralschmelzekanäle parallel zueinander erstrecken und zugleich senkrecht zur Mittelachse des Extrusionskopfes angeordnet sind.

Vorteilhafte Ausgestaltungen und Weiterbildungen der Erfindung sind den Unteransprüchen, sowie der Beschreibung unter Bezugnahme auf die Zeichnungen entnehmbar.

Gemäß der vorliegenden Erfindung ist vorgesehen, dass der Spiralverteilerkopf in Fließrichtung der Schmelze gesehen nachgeordnet zum konzentrischen Wendelverteilerkopf angeordnet ist. Dadurch ist es vorteilhaft möglich, den gemeinsamen Fließweg der Schmelze erheblich zu verkürzen. Die Fließrichtung ist diejenige Richtung, in der die Schmelze aus dem Extrusionskopf austritt. Die Fließrichtung kann z.B. in Richtung der Gravitationskraft oder entgegen der Gravitationskraft gerichtet sein.

Ferner ist es vorgesehen, dass der Spiralverteilerkopf mindestens ein Spiralverteilermodul aufweist, welches mindestens einen einzigen Spiralschmelzekanal bildet. Dadurch wird der Aufbau des Spiralverteilerkopfes vorteilhaft erheblich vereinfacht.

Dieses einzelne Spiralverteilermodul bildet mindestens einen einzigen Spiralschmelzekanal, so dass je nach Bedarf für einen weiteren Spiralschmelzekanal genau ein weiteres Spiralverteilermodul angeordnet wird. Falls gewünscht ist, einen Spiralschmelzekanal zu entfernen, wird dementsprechend ein Spiralverteilermodul entfernt werden. Dieses vereinfacht erheblich die Montage des Spiralverteilerkopfes und ermöglicht eine flexible Anpassung des Extrusionskopfes an die erforderliche bzw. gewünschte Schichtenzahl.

Der Spiralschmelzekanal ist innerhalb einer Ebene angeordnet, wobei die Ebene senkrecht zur Mittelachse des Extrusionskopfes angeordnet ist. Durch die senkrechte Anordnung des Spiralschmelzekanals ist es vorteilhaft möglich, die räumliche Ausdehnung des Spiralverteilerkopfes, d.h. insbesondere die Höhe des Spiralverteilerkopfes in Fließrichtung, vergleichsweise gering zu halten. Dieses erleichtert zum einen das Aufheizen der Schmelze im Spiralverteilerkopf. Zum andern erleichtert dies erheblich die Montage und die Demontage des Spiralverteilerkopfes.

Außerdem werden die Demontage und die Montage des Extrusionskopfes insgesamt erheblich vereinfacht. Des Weiteren ist auf einfache Weise eine Wärmetrennung zwischen dem konzentrischen Wendelverteilerkopf und dem Spiralverteilerkopf zu erreichen. Durch die erreichbare Wärmetrennung ist es zum Beispiel möglich, Materialien mit unterschiedlichen Eigenschaften bezogen auf die Verarbeitungstemperatur vorteilhaft zu verarbeiten.

Gemäß einer anderen beispielhaften Ausführungsform der vorliegenden Erfindung ist es vorgesehen, dass der Spiralverteilerkopf modular aufgebaut ist. Durch den modularen Aufbau ist es vorteilhaft möglich, auf besonders einfache Art und Weise die Anzahl der Folienschichten zu erhöhen, zu reduzieren oder zu modifizieren.

Außerdem kann die Montage und Demontage des Spiralverteilerkopfes erheblich vereinfacht werden. Des Weiteren kann der konzentrische Wendelverteilerkopf unverändert bleiben, während der modulartige Spiralverteilerkopf beliebig und flexibel verändert, erweitert oder reduziert werden kann.

Gemäß einer anderen beispielhaften Ausführungsform der vorliegenden Erfindung ist vorgesehen, dass der konzentrische Wendelverteilerkopf mindestens einen konzentrischen Wendelverteilerkanal aufweist, wobei der konzentrische Wendelverteilerkanal und der Spiralschmelzekanal in einen gemeinsamen Schmelzekanal münden. Dadurch ist es vorteilhaft möglich, die Länge des Spiralschmelzekanals vergleichsweise kurz zu halten.

Gemäß einer anderen beispielhaften Ausführungsform der vorliegenden Erfindung ist vorgesehen, dass der gemeinsame Schmelzekanal in Fließrichtung der Schmelze gesehen nach dem konzentrischen Wendelverteilerkanal und dem Spiralschmelzekanal angeordnet ist. Dadurch ist es vorteilhaft möglich, den gemeinsamen Fließweg der Schmelze vergleichsweise gering zu halten.

Gemäß einer anderen beispielhaften Ausführungsform der vorliegenden Erfindung ist vorgesehen, dass dem Spiralschmelzekanal Schmelze lateral von außen über eine Zuführeinrichtung zuführbar ist. Diese laterale Zuführung von außen hat den Vorteil, dass dadurch die Schmelzezuführung erheblich vereinfacht werden kann. Die Schmelze kann aber auch alternativ durch den Extrusionskopf zugeführt werden. Dies kann zum Beispiel von unten nach oben, entsprechend der Fließrichtung der Schmelze, geschehen. Die zentrale Zuführung hat z.B. den Vorteil, dass der radial äußere Bereich des Extrusionskopfes nicht für die Vorverteilung der Schmelze reserviert bzw. konfiguriert werden muss.

Gemäß einer anderen beispielhaften Ausführungsform der vorliegenden Erfindung ist vorgesehen, dass der Spiralverteilerkopf eine Vielzahl an Spiralverteilermodulen aufweist, wobei jedes Spiralverteilermodul mindestens einen separaten Spiralschmelzekanal bildet. Durch die Vielzahl an Spiralverteilermodulen kann vorteilhaft eine Vielzahl an separaten Spiralschmelzekanälen angeordnet werden, wodurch vorteilhaft die Anzahl der Schichten auf einfache Weise erhöht werden kann.

Gemäß einer anderen beispielhaften Ausführungsform der vorliegenden Erfindung ist vorgesehen, dass die Spiralverteilermodule in Fließrichtung gesehen übereinander angeordnet sind. Dadurch ist vorteilhaft eine besonders kompakte und bauraumsparende Ausbildung erreichbar. Insbesondere ist es vorgesehen, dass die Spiralverteilermodule in Fließrichtung der Schmelze gesehen aufeinanderfolgend angeordnet sind.

Gemäß einer anderen beispielhaften Ausführungsform der vorliegenden Erfindung ist vorgesehen, dass die Spiralverteilermodule als separate Bauteile ausgebildet sind. Dadurch ist es vorteilhaft möglich, die einzelnen Spiralverteilermodule je nach Bedarf an Schichten zu entfernen bzw. hinzuzufügen.

Gemäß einer anderen beispielhaften Ausführungsform der vorliegenden Erfindung ist vorgesehen, dass die Spiralverteilermodule als Gleichteile ausgebildet sind. Dadurch ist vorteilhaft eine vereinfachte Montage und Demontage sowie eine Reduzierung der Ersatzteile möglich.

Gemäß einer anderen beispielhaften Ausführungsform der vorliegenden Erfindung ist vorgesehen, dass der Spiralverteilerkopf derart ausgebildet ist, dass zur Hinzufügung einer weiteren Schicht ein weiteres Spiralverteilermodul angeordnet und zur Entfernung einer Schicht ein Spiralverteilermodul entfernt wird. Dadurch ist vorteilhaft eine besonders einfache und schnelle Anpassung des Extrusionskopfes an die gewünschte Anzahl an Schichten möglich.

Auch ist es möglich, einen vorhandenen konzentrischen Wendelverteilerkopf bei Bedarf mit einem Spiralverteilerkopf zu erweitern, um einen erfindungsgemäßen Extrusionskopf mit entsprechend erhöhter Schichtenanzahl zu erhalten.

Aus der Druckschrift DE 10 2004 040 151 A1 ist bekannt, den Wendelverteiler des äußeren Schmelzekanals auf der in Bezug auf die Mittelachse des Folienblaskopfes außenliegenden Begrenzungswandung anzuordnen. Dadurch wird das Entstehen von trüben Streifen oder welligen Bereichen auf der Folie, der sogenannten Wendelstreifen, vermieden. Allerdings hat diese Ausgestaltung den Nachteil, dass die Herstellung des Wendelverteilers relativ aufwändig ist. Um durch die Wendel etwaig entstehende Markierungen zu minimieren, bietet der erfindungsgemäße Spiralverteilerkopf die Möglichkeit, durch Wahl der Seite, in die die Wendel eingebracht sind, die Markierungen positiv zu beeinflussen und außerdem die mechanische Fertigung derselben zu vereinfachen.

Ausführungsbeispiele der vorliegenden Erfindung sind in der Zeichnung dargestellt und in der nachfolgenden Beschreibung näher erläutert.

### Kurze Beschreibung der Zeichnung

Es zeigt schematisch
- Figur 1: einen Schlauchfolienblaskopf gemäß einer beispielhaften Ausführungsform der Erfindung in einer Ansicht auf einen Längsschnitt durch den Schlauchfolienblaskopf, wobei ein Teil des unteren Bereichs aus Gründen der besseren Übersichtlichkeit nicht dargestellt ist.
- Figur 2: eine weitere Ausführungsform der Erfindung

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

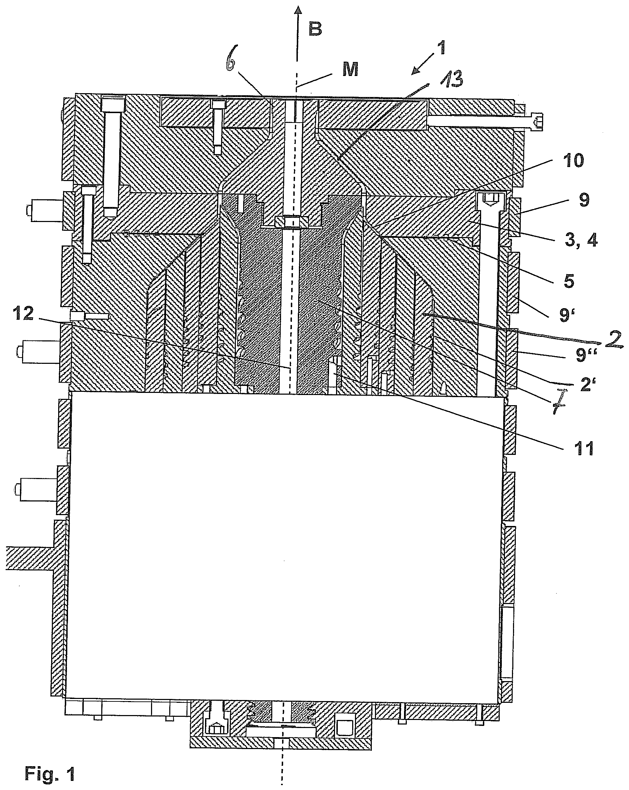

Mit Figur 1 zeigt schematisch einen Extrusionskopf, der im dargestellten Beispiel als Schlauchfolienblaskopf 1 zur Extrusion einer Schlauchfolie mit mehreren Folienschichten ausgebildet ist. Dargestellt ist ein Längsschnitt durch den Schlauchfolienblaskopf 1 entlang der gestrichelt dargestellten Mittellinie bzw. Mittelachse M.

Der Schlauchfolienblaskopf 1 weist in herkömmlicher Weise einen inneren konzentrischen Wendelverteiler 7 auf. Der innere konzentrische Wendelverteiler 7 weist einen Luftdurchgang 12 auf, der als zentraler Durchgang durch die Mitte des Inneren konzentrischen Wendelverteilers 7 ausgebildet ist. In herkömmlicher Weise wird Luft zum Aufblasen der Schlauchfolie durch den Luftdurchgang 12 in Fließrichtung B (mit dem Pfeil gekennzeichnet) der Schmelze geblasen. Der innere konzentrische Wendelverteiler 7 ist in diesem Ausführungsbeispiel im Wesentlichen zylindrisch ausgebildet. An den inneren konzentrischen Wendelverteiler 7 schließt sich in Fließrichtung der Schmelze ein Dorn 6 an. Der Luftdurchgang 12 ist in dieser Ausführungsform als zentrale Längsbohrung durch den inneren konzentrischen Wendelverteiler 7 und den Dorn 6 ausgebildet.

Der Schlauchfolienblaskopf 1 weist Schmelzezuführeinrichtungen auf. Die Schmelze bzw. Schmelzen können lateral von der Seite, d.h. senkrecht zur Mittelachse M, in den Schlauchfolienblaskopf 1 eingebracht werden. Alternativ ist es auch möglich, die Schmelzezuführung im Wesentlichen parallel zur Mittelachse M durch den Schlauchfolienblaskopf 1 auszubilden bzw. anzuordnen.

Weiterhin weist der Schlauchfolienblaskopf 1 Heizeinrichtungen 9, 9', 9", sowie noch weitere Heizeinrichtungen auf, die kein Bezugszeichen aufweisen, die zur Erwärmung der Schmelzen dienen. Des Weiteren weist der Schlauchfolienblaskopf 1 Zuführkanäle 11 auf, die zur Zuführung der Schmelze zu konzentrischen Wendelverteilerkanälen 2' dienen. Der Schlauchfolienblaskopf 1 weist weiterhin einen Ringspalt 13 auf. Durch diesen Ringspalt 13 tritt die Schmelze aus dem Schlauchfolienblaskopf 1 in Fließrichtung B aus.

Des Weiteren weist der Schlauchfolienblaskopf 1 einen konzentrischen Wendelverteilerkopf 2 auf. In diesem Ausführungsbeispiel weist der konzentrische Wendelverteilerkopf 2 sechs konzentrische Wendelverteilerkanäle 2' auf. Der Wendelverteilerkopf 2 kann aber auch eine andere Anzahl an Wendelverteilerkanälen 2' aufweisen. So kann der Wendelverteilerkopf 2 alternativ auch lediglich einen, zwei, drei, vier, fünf, sieben, acht oder mehr Wendelverteilerkanäle 2' aufweisen.

Die konzentrischen Wendelverteilerkanäle 2' sind in herkömmlicher Weise ausgebildet und aus dem Stand der Technik bekannt. Bekannterweise verringert sich der Querschnitt der konzentrischen Wendelverteilerkanäle 2' in Fließrichtung B. Jeder konzentrische Wendelverteilerkanal 2' mündet in Fließrichtung B in einen Schmelzekanal. Die Schmelzekanäle werden in Fließrichtung B in Gruppen und/oder nacheinander zusammengeführt und münden schließlich in Fließrichtung B oben in den Ringspalt 13.

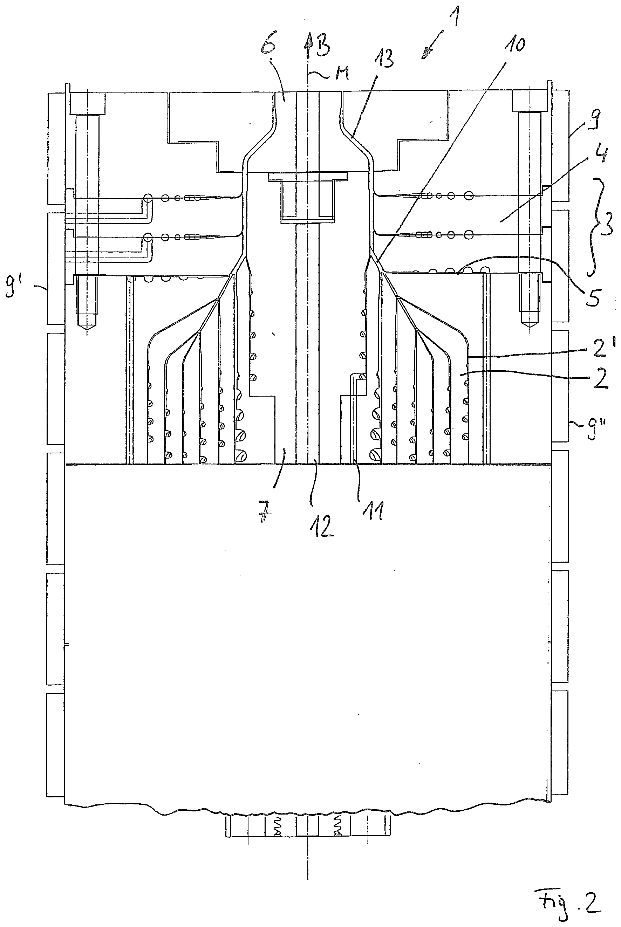

Erfindungsgemäß weist der Schlauchfolienblaskopf 1 zusätzlich zum konzentrischen Wendelverteilerkopf 2 einen Spiralverteilerkopf 3 auf. In dieser Ausführungsform weist der Spiralverteilerkopf 3 ein Spiralverteilermodul 4 auf. Der Spiralverteilerkopf 3 kann aber auch zwei, drei, vier oder mehr Spiralverteilermodule 4 aufweisen, wie es in Figur 2 mit insgesamt drei Spiralverteilermodulen 4 beispielhaft dargestellt ist.

Jedes Spiralverteilermodul 4 umfasst eine Schmelzezuführung, eine Vorverteilung, einen Spiralverteiler, Heizeinrichtungen, den Schmelzekanal und Fixierungsmittel.

Das Spiralverteilermodul 4 erhält seine Schmelze von der Schmelzezuführung. Das Spiralverteilermodul 4 erhält die erforderliche Schmelzwärme von der Heizeinrichtung 9, die lateral außen am Spiralverteilermodul 4 angeordnet ist.

Das Spiralverteilermodul 4 ist z.B. über Schraubverbindungen als Fixierungsmittel befestigt. Das Spiralverteilermodul 4 bildet einen spiralförmigen Schmelzekanal 5 (auch Spiralschmelzekanal 5 genannt). Der Schmelzekanal 5 erhält die Schmelze von der Zuführeinrichtung über nicht dargestellte Kanäle, die sich zwischen der Zuführeinrichtung und dem Schmelzekanal 5 erstrecken.

Der Schmelzekanal 5 ist in bekannter Weise spiralförmig ausgebildet. Sein Querschnitt verringert sich in bekannter Weise von außen nach innen. Der Schmelzekanal 5 erstreckt sich in einer einzigen Ebene, die in dieser Ausführungsform senkrecht zur Mittelachse M ausgebildet ist. Von außen nach innen gesehen mündet der Schmelzekanal 5 in einen gemeinsamen Schmelzekanal 10. Der gemeinsame Schmelzekanal 10 nimmt auch die Schmelze aus den vier äußeren konzentrischen Schmelzekanälen 2' auf.

Der Schmelzekanal 5 kann - wie exemplarisch in Fig. 2 dargestellt - sowohl in der Oberseite als auch der Unterseite eines Moduls des Spiralverteilerkopfes 3 oder korrespondierend in beiden Seiten gleichermaßen eingebracht sein.

Der Schmelzekanal 10 verläuft in diesem Ausführungsbeispiel etwa im Winkel von 45° in Bezug auf die Mittelachse M. Der Schmelzekanal 10 kann aber auch in einem anderen Winkel, wie zum Beispiel 90° oder mehr, in Bezug auf die Mittelachse M verlaufen. In Fließrichtung B gesehen läuft der Schmelzekanal 10 danach mit dem von innen gesehen zweiten konzentrischen Schmelzekanal 2' zusammen. Danach laufen in Fließrichtung B gesehen diese Kanäle mit dem innersten konzentrischen Schmelzekanal 2' zusammen, bevor sie in den Ringspalt 13 münden.

Zur Herstellung einer Schlauchfolie wird Schmelze auf herkömmliche Weise über die Zuführungen zugeführt. Der Schlauchfolienblaskopf 1 wird auf herkömmliche Weise über die Heizeinrichtung 9', 9" erhitzt, so dass die Schmelzen die erforderliche Temperatur erhalten. Die Schmelze fließt von den Zuführeinrichtungen über Zuführkanäle 11 zu den konzentrischen Wendelverteilerkanälen 2'.

Außerdem wird Schmelze von der Zuführeinrichtung über nicht dargestellte Kanäle dem spiralförmigen Schmelzekanal 5 zugeführt, wobei die Erwärmung der Schmelze über die Heizeinrichtung 9 erfolgt. Der Schmelzekanal 5 leitet die Schmelze in den gemeinsamen Schmelzekanal 10. Über den Schmelzekanal 10 laufen die Schmelzen schichtweise aufeinanderfolgend in Fließrichtung B in Richtung des Ringspaltes 13. In bekannter Weise tritt die Schmelze aus dem Ringspalt 13 aus und wird von der durch den Luftdurchgang 12 geblasenen Luft zu einer Schlauchfolie aufgeblasen.

Mit dem Schlauchfolienblaskopf 1 gemäß dieser dargestellten Ausführungsform kann eine Schlauchfolie mit sieben Schichten hergestellt werden. Durch den modulartigen Aufbau des Spiralverteilerkopfes 3 ist es möglich, auf einfache Weise die Anzahl der Folienschichten zu erhöhen. Dazu muss lediglich ein weiteres Spiralverteilermodul 4, welches einen weiteren Spiralschmelzekanal 5 bildet, in Fließrichtung B oberhalb des dargestellten Spiralverteilermoduls 4 angeordnet werden.

Dies kann zum Beispiel auf einfache Weise mittels einer Schraubverbindung geschehen. Der bestehende konzentrische Wendelverteilerkopf 2 braucht nicht ausgewechselt werden. Gleichwohl ist es alternativ möglich, einen anderen konzentrischen Wendelverteilerkopf 2 zu verwenden. Dieser ist natürlich wiederum mit einem modularen Spiralverteilerkopf 3 kombinierbar, so dass nahezu beliebige Kombinationen aus konzentrischen Wendelverteilerköpfen 2 und Spiralverteilerköpfen 3 realisierbar sind. Das vorgestellte Ausführungsbeispiel soll den Gegenstand der Anmeldung daher keinesfalls einschränken.

### Bezugszeichenliste

- 1: Schlauchfolienblaskopf
- 2: konzentrischer Wendelverteilerkopf
- 2': konzentrischer Wendelverteilerkanal
- 3: Spiralverteilerkopf
- 4: Spiralverteilermodul
- 5: Spiralschmelzekanal
- 6: Dorn
- 7: Innerer konzentrischer Wendelverteiler
- 9,9',9": Heizeinrichtung
- 10: Schmelzekanal
- 11: Zuführkanal
- 12: Luftdurchgang
- 13: Ringspalt
- B: Fließrichtung der Schmelze
- M: Mittelachse

## Patentansprüche

1. Extrusionskopf (1) zur Herstellung von Mehrschichtstrukturen aus thermoplastischem Kunststoff, aufweisend einen zu einer Mittelachse (M) des Extrusionskopfes (1) konzentrischen Wendelverteilerkopf (2) und einen zusätzlich zum konzentrischen Wendelverteilerkopf (2) vorgesehenen Spiralverteilerkopf (3) mit mindestens einem Spiralverteilermodul (4), welches mindestens einen einzigen Spiralschmelzekanal (5) bildet und der Spiralschmelzekanal (5) innerhalb einer Ebene angeordnet ist, die senkrecht zur Mittelachse (M) des Schlauchfolienblaskopfes (1) angeordnet ist und der Spiralverteilerkopf (3) in Fließrichtung (B) der Schmelze gesehen nachgeordnet zum konzentrischen Wendelverteilerkopf (2) angeordnet ist, **dadurch gekennzeichnet, dass** der konzentrische Wendelverteilerkopf (2) einen inneren konzentrischen und zylindrisch ausgebildeten Wendelverteiler (7) und mehrere konzentrisch zum zylindrischen Wendelverteiler (7) angeordnete Wendelverteilerkanäle (2') aufweist, wobei die Wendelverteilerkanäle (2')und der mindestens eine Spiralschmelzekanal (5) in einen gemeinsamen Schmelzekanal (10) münden.

2. Extrusionskopf (1) nach Anspruch 1, **dadurch gekennzeichnet, dass** der gemeinsame Schmelzekanal (10) in Fließrichtung (B) der Schmelze gesehen nach dem konzentrischen Wendelverteilerkanal (2') und dem Spiralschmelzekanal (5) angeordnet ist.

3. Extrusionskopf (1) nach einem der Ansprüche 1 oder 2, **dadurch gekennzeichnet, dass** dem Spiralschmelzekanal (5) Schmelze lateral von außen über eine Zuführeinrichtung zuführbar ist.

4. Extrusionskopf (1) nach einem der Ansprüche 1 oder 2, **dadurch gekennzeichnet, dass** dem Spiralschmelzekanal (5) Schmelze durch den Extrusionskopf (1) zuführbar ist.

5. Extrusionskopf (1) nach einem der Ansprüche 1 bis 4, **dadurch gekennzeichnet, dass** der Spiralverteilerkopf (3) eine Vielzahl an Spiralverteilermodulen (4) aufweist, wobei jedes Spiralverteilermodul (4) mindestens einen separaten Spiralschmelzekanal (5) bildet.

6. Extrusionskopf (1) nach Anspruch 5, **dadurch gekennzeichnet, dass** die Spiralverteilermodule (4) in Fließrichtung (B) der Schmelze gesehen übereinander angeordnet sind.

7. Extrusionskopf (1) nach Anspruch 5 oder 6, **dadurch gekennzeichnet, dass** die Spiralverteilermodule (4) als separate Bauteile ausgebildet sind.

8. Extrusionskopf (1) nach Anspruch 5, 6, oder 7, **dadurch gekennzeichnet, dass** die Spiralverteilermodule (4) als Gleichteile ausgebildet sind.

9. Extrusionskopf (1) nach einem der Ansprüche 5 bis 8, **dadurch gekennzeichnet, dass** der Spiralverteilerkopf (3) derart ausgebildet ist, dass zur Hinzufügung einer weiteren Schicht ein weiteres Spiralverteilermodul (4) angeordnet und zur Entfernung einer Schicht ein Spiralverteilermodul (4) entfernt wird.

10. Extrusionskopf (1) nach einem der vorangegangenen Ansprüche, **gekennzeichnet durch** Ausbildung als Schlauchfolienblaskopf.

## Claims

1. Extrusion head (1) for producing multi-layered structures made of thermoplastic material, having a helical distributor head (2) concentric to a central axis (M) of the extrusion head (1) and a spiral distributor head (3) provided in addition to the concentric helical distributor head (2) with at least one spiral distributor module (4) which forms at least one single spiral melt channel (5) and the spiral melt channel (5) is arranged in a plane which is arranged perpendicular to the central axis (M) of the tubular film blow head (1) and the spiral distributor head (3) is arranged as viewed in flow direction (B) of the melt downstream of the concentric helical distributor head (2), **characterised in that** the concentric helical distributor head (2) has an inner concentric and cylindrically designed helical distributor (7) and a plurality of helical distributor channels (2') arranged to be concentric to the cylindrical helical distributor (7), wherein the helical distributor channels (2') and the at least one spiral melt channel (5) open into a common melt channel (10).

2. Extrusion head (1) according to claim 1, **characterised in that** the common melt channel (10) as viewed in flow direction (B) of the melt is arranged after the concentric helical distributor channel (2') and the spiral melt channel (5).

3. Extrusion head (1) according to any of claims 1 or 2, **characterised in that** melt can be supplied laterally from the outside to the spiral melt channel (5) via a feeding device.

4. Extrusion head (1) according to any of claims 1 or 2, **characterised in that** melt can be supplied through the extrusion head (1) to the spiral melt channel (5).

5. Extrusion head (1) according to any of claims 1 to 4, **characterised in that** the spiral distributor head (3) has a plurality of spiral distributor modules (4), wherein each spiral distributor module (4) forms at least one separate spiral melt channel (5).

6. Extrusion head (1) according to claim 5, **characterised in that** the spiral distributor modules (4) are arranged above one another as viewed in flow direction (B) of the melt.

7. Extrusion head (1) according to claim 5 or 6, **characterised in that** the spiral distributor modules (4) are designed as separate components.

8. Extrusion head (1) according to claim 5, 6 or 7, **characterised in that** the spiral distributor modules (4) are designed as common parts.

9. Extrusion head (1) according to any of claims 5 to 8, **characterised in that** the spiral distributor head (3) is designed such that an additional spiral distributor module (4) is arranged for adding a further layer and a spiral distributor module (4) is removed for removing a layer.

10. Extrusion head (1) according to any of the preceding claims, **characterised by** its design as a tubular film blow head.

## Revendications

1. Tête d'extrusion (1) pour la production de structures multicouches en matière thermoplastique, présentant une tête de distribution hélicoïdale concentrique (2) par rapport à un axe central (M) de la tête d'extrusion (1) et une tête de distribution en spirale (3) prévue en plus de la tête de distribution hélicoïdale concentrique (2) avec au moins un module de distribution en spirale (4) qui forme au moins un canal de coulée en spirale (5) unique et le canal de coulée en spirale (5) est agencé dans un plan qui est agencé de manière perpendiculaire à l'axe central (M) de la tête de soufflage de film tubulaire (1) et la tête de distribution en spirale (3), vue dans le sens d'écoulement (B) de la coulée, est agencée en aval de la tête de distribution hélicoïdale concentrique (2), **caractérisée en ce que** la tête de distribution hélicoïdale concentrique (2) présente un distributeur hélicoïdal (7) interne concentrique et de forme cylindrique et plusieurs canaux de distribution hélicoïdaux (2') agencés concentriques par rapport au distributeur hélicoïdal cylindrique (7), dans laquelle les canaux de distribution hélicoïdaux (2') et le au moins un canal de coulée en spirale (5) débouchent dans un canal de coulée (10) commun.

2. Tête d'extrusion (1) selon la revendication 1, **caractérisée en ce que** le canal de coulée (10) commun, vu dans le sens d'écoulement (B) de la coulée, est agencé en aval du canal de distribution hélicoïdal concentrique (2') et du canal de coulée en spirale (5).

3. Tête d'extrusion (1) selon l'une quelconque des revendications 1 ou 2, **caractérisée en ce qu'**une coulée peut être alimentée vers le canal de coulée en spirale (5) de manière latérale depuis l'extérieur par l'intermédiaire d'un dispositif d'alimentation.

4. Tête d'extrusion (1) selon l'une quelconque des revendications 1 ou 2, **caractérisée en ce qu'**une coulée peut être alimentée vers le canal de coulée en spirale (5) en passant par la tête d'extrusion (1).

5. Tête d'extrusion (1) selon l'une quelconque des revendications 1 à 4, **caractérisée en ce que** la tête de distribution en spirale (3) présente une pluralité de modules de distribution en spirale (4), dans laquelle chaque module de distribution en spirale (4) forme au moins un canal de coulée en spirale (5) séparé.

6. Tête d'extrusion (1) selon la revendication 5, **caractérisée en ce que** les modules de distribution en spirale (4), vus dans le sens d'écoulement (B) de la coulée, sont agencés les uns sur les autres.

7. Tête d'extrusion (1) selon la revendication 5 ou 6, **caractérisée en ce que** les modules de distribution en spirale (4) sont réalisés sous la forme de composants séparés.

8. Tête d'extrusion (1) selon la revendication 5, 6 ou 7, **caractérisée en ce que** les modules de distribution en spirale (4) sont réalisés sous la forme de pièces identiques.

9. Tête d'extrusion (1) selon l'une quelconque des revendications 5 à 8, **caractérisée en ce que** la tête de distribution en spirale (3) est conçue de telle manière qu'un module de distribution en spirale (4) supplémentaire est agencé pour ajouter une couche supplémentaire et un module de distribution en spirale (4) est supprimé pour supprimer une couche.

10. Tête d'extrusion (1) selon l'une quelconque des revendications précédentes, **caractérisée par** un mode de réalisation sous forme de tête de soufflage de film tubulaire.
